# DEMANDE DE BREVET EUROPEEN

(11) **EP 4 672 771 A1**
(43) Date de publication de la demande: **31.12.2025**
(21) Numéro de dépôt: 25172898.6
(22) Date de dépôt: 28.04.2025
(51) Int. Cl.: H04N 23/55, G03B 11/00, H04N 23/65

(54) **ÉQUIPEMENT ÉLECTRONIQUE A VOLET TRANSLUCIDE ET PROCÉDÉ DE GESTION ASSOCIÉ**

(30) Priorité: 25.06.2024 FR 2406822
(71) Demandeur: SAGEMCOM BROADBAND SAS, 92270 Bois-Colombes (FR)
(72) Inventeur: NEDELCU, Radu, 92270 BOIS-COLOMBES (FR); REYNAUD, Vincent-Xavier, 92270 BOIS-COLOMBES (FR)
(74) Mandataire: Cabinet Boettcher

(57) **Abrégé**

Equipement électronique (1), comprenant :
- un caisson (100) pourvu d'au moins une ouverture,
- un dispositif de capture d'images,
- un obturateur (10) monté mobile dans le caisson entre un état de travail et un état de repos de sorte que, lorsque l'obturateur est dans son état de travail, le dispositif de capture d'images visualise l'extérieur du caisson par l'intermédiaire de l'ouverture, et, lorsque l'obturateur est dans son état de repos, l'obturateur masque l'ouverture pour le dispositif de capture d'images,
l'équipement comprenant un volet (11) monté mobile dans le caisson entre un état de retrait et un état de protection de sorte que, lorsque le volet est dans son état de protection et l'obturateur est dans son état de travail, le dispositif de capture d'images visualise l'extérieur du caisson par l'intermédiaire de l'ouverture et d'une zone translucide du volet.

Procédé de gestion correspondant.

## Description

La présente invention concerne le domaine des équipements électroniques intégrant au moins un dispositif de capture d'images.

La présente invention concerne également un procédé de gestion de la mise en veille d'un tel équipement.

La présente invention concerne également un programme d'ordinateur et un support d'enregistrement associés.

### ARRIERE PLAN DE L'INVENTION

Il est connu de l'état de la technique qu'un équipement électronique, tel qu'un boîtier décodeur, puisse intégrer une caméra permettant à un utilisateur de réaliser des vidéoconférences.

Ce type de boitier décodeur doit cependant respecter des règlementations européennes en matière de consommation électrique en veille.

Usuellement cette veille est commandée soit de manière manuelle par l'utilisateur directement soit de manière automatique après un laps de temps donné d'inutilisation du boitier décodeur.

Malheureusement, durant ce laps de temps, la caméra peut continuer à enregistrer des images ce qui est problématique d'un point de vue de la vie privée de l'utilisateur qui n'utilise plus le boitier décodeur.

### OBJET DE L'INVENTION

L'invention a notamment pour but de proposer une solution de gestion de la mise en veille d'un équipement électronique qui soit plus respectueux de la vie privée d'un utilisateur.

### RESUME DE L'INVENTION

A cet effet, on prévoit, selon l'invention un équipement électronique, comprenant :
- un caisson pourvu d'au moins une ouverture,
- un dispositif de capture d'images doté d'un champ de vision,
- un obturateur monté mobile dans le caisson entre au moins un état de travail et un état de repos de sorte que, lorsque l'obturateur mobile est dans son état de travail, le dispositif de capture d'images puisse visualiser en service l'extérieur du caisson par l'intermédiaire de l'ouverture, et, lorsque l'obturateur est dans son état de repos, l'obturateur masque l'ouverture pour le dispositif de capture d'images.

Selon l'invention, l'équipement électronique comprend un volet monté mobile dans le caisson entre au moins un état de retrait et un état de protection de sorte que, lorsque le volet est dans son état de protection et l'obturateur est dans son état de travail, le dispositif de capture d'images puisse visualiser en service l'extérieur du caisson par l'intermédiaire de l'ouverture et d'une zone translucide du volet.

De la sorte, le volet translucide permet de flouter les images acquises lorsqu'il est en état de protection.

Ainsi, même si le dispositif de capture d'images continue à observer l'extérieur de l'équipement électronique, la vie privée de l'utilisateur est bien mieux respectée.

Le volet étant partiellement occultant, il rend l'image suffisamment floue pour rendre une identification impossible d'un utilisateur mais suffisamment nette pour permettre d'identifier les mouvements. Le volet permet de distinguer les contrastes sans distinguer précisément les formes. Avantageusement, lorsque le volet est en état de protection, il est visible par l'utilisateur qui n'a ainsi pas de doute sur son activation.

Par la suite les termes « supérieur », « inférieur », « avant », « arrière » **...** doivent s'étendre selon la position en service de l'équipement électronique lorsque celui-ci repose sur une structure plane qui est préférentiellement parallèle à l'horizontale.

Optionnellement, le volet est intégré à l'obturateur. Optionnellement, l'obturateur est monté mobile dans le caisson entre une première position dans laquelle l'obturateur est dans son état de travail et le volet dans son état de retrait, une deuxième position dans laquelle l'obturateur est dans son état de travail et le volet dans son état de protection et une troisième position dans laquelle l'obturateur est dans son état de repos. Optionnellement, **l'obturateur** est monté coulissant sur le caisson entre ses trois positions.

Optionnellement, le volet est indépendant de l'obturateur. Optionnellement, l'un de l'obturateur ou du volet est monté mobile sur l'extérieur du caisson et l'autre de l'obturateur ou du volet est monté mobile à l'intérieur du caisson. Optionnellement, le volet est teinté.

Optionnellement, l'équipement électronique est un boitier décodeur.

Optionnellement, l'équipement électronique comprend au moins une unité de contrôle connectée au dispositif de capture **d'images,** l'unité de contrôle étant apte à faire basculer l'équipement électronique dans chacun d'au moins trois modes de fonctionnement différents qui sont un mode nominal, un mode de veille légère et un mode de veille profonde. Optionnellement, l'unité de contrôle est apte à faire basculer l'équipement électronique entre le mode de veille légère et le mode de veille profonde, et inversement, à partir d'au moins une image transmise par le dispositif de capture d'images lorsque le volet est dans son état de protection et l'obturateur est dans son état de travail. Optionnellement, l'unité de contrôle est apte à faire basculer l'équipement électronique entre le mode de veille légère et le mode de veille profonde, et inversement, à partir d'au moins une image transmise par le dispositif de capture d'images également lorsque le volet est dans son état de de retrait et l'obturateur est dans son état de travail.

Optionnellement, l'unité de contrôle est apte à faire basculer l'équipement électronique entre le mode de veille légère et le mode de veille profonde, et inversement, à partir seulement d'une partie supérieure d'au moins une image transmise par le dispositif de capture d'images lorsque le volet est dans son état de protection et l'obturateur est dans son état de travail.

L'invention concerne également un procédé de gestion de la mise en veille d'un équipement électronique tel que précité, le procédé comprenant au moins les étapes de :
- analyser des images acquises par le dispositif de capture d'images, lorsque le volet est dans son état de protection et l'obturateur est dans son état de travail, afin de détecter un mouvement d'au moins un élément présent sur les images,
- basculer l'équipement décodeur dans le mode de veille profonde si l'équipement décodeur était dans le mode de veille légère si aucun mouvement n'est détecté dans un intervalle de temps donné ou basculer l'équipement décodeur dans le mode de veille légère si l'équipement décodeur était dans le mode de veille profonde et qu'un mouvement est détecté.

Optionnellement, le basculement du mode de veille profonde au mode de veille légère est effectué si le mouvement détecté a une vitesse supérieure à un seuil donné.

Optionnellement, le procédé comprend les étapes additionnelles de :
- analyser des images acquises par le dispositif de capture d'images, lorsque le volet est dans son état de retrait et l'obturateur est dans son état de travail, afin de détecter un mouvement d'au moins un élément présent sur les images,
- basculer l'équipement décodeur dans le mode de veille profonde si l'équipement décodeur était dans le mode de veille légère si aucun mouvement n'est détecté dans un intervalle de temps donné ou basculer l'équipement décodeur dans le mode de veille légère si l'équipement décodeur était dans le mode de veille profonde et qu'un mouvement est détecté.

L'invention concerne également un programme d'ordinateur comprenant des instructions qui conduisent un boitier électronique tel que précité à exécuter le procédé tel que précité.

L'invention concerne également un support d'enregistrement lisible par ordinateur, sur lequel est enregistré le programme d'ordinateur tel que précité.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence aux dessins annexés, parmi lesquels :
[Fig. 1a] la figure 1a est une vue schématique du dessus d'une portion d'un équipement électronique selon un premier mode de réalisation de l'invention, dans une première configuration ;
[Fig. 1b] la figure 1b est une vue schématique de la portion de l'équipement électronique illustrée à la figure 1a, dans une deuxième configuration ;
[Fig. 1c] la figure 1c est une vue schématique de la portion de l'équipement électronique illustrée à la figure 1a, dans une troisième configuration ;
[Fig. 2a] la figure 2a est une vue schématique du dessus d'une portion d'un équipement électronique selon un deuxième mode de réalisation de l'invention, dans une première configuration ;
[Fig. 2b] la figure 2b est une vue schématique de la portion de l'équipement électronique illustrée à la figure 2a, dans une deuxième configuration ;
[Fig. 2c] la figure 2c est une vue schématique de la portion de l'équipement électronique illustrée à la figure 2a, dans une troisième configuration.

### DESCRIPTION DETAILLEE DE L'INVENTION

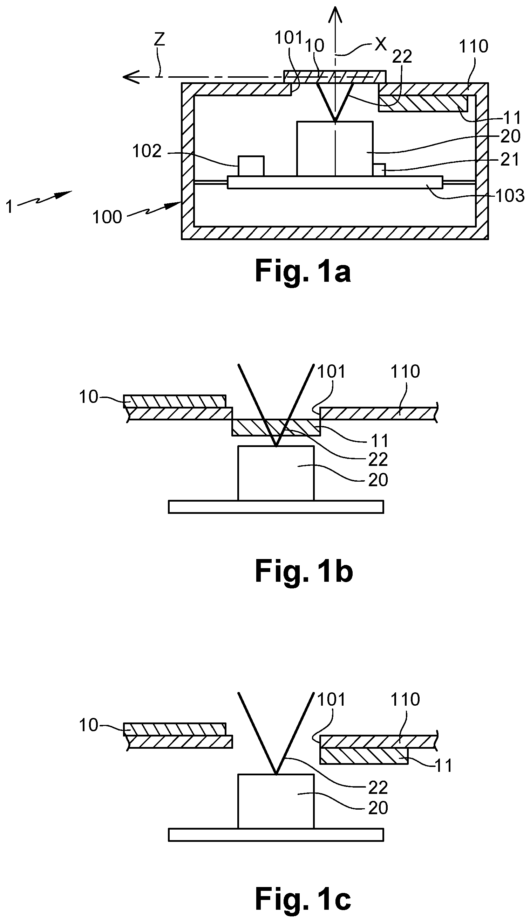

En référence aux figures 1a et 1b, il est décrit un équipement électronique 1 selon un premier mode de réalisation de l'invention.

L'équipement électronique 1 est ici un boîtier décodeur. L'équipement électronique 1 comprend un caisson 100. Le caisson 100 est doté d'une paroi supérieure, d'une paroi inférieure et d'au moins une paroi latérale reliant entre elles la paroi supérieure et la paroi inférieure. De préférence, la paroi inférieure et la paroi supérieure sont parallèles entre elles. La paroi inférieure et la paroi supérieure sont par exemple conformées en rectangle ou en carré de préférence aux bords arrondis. Par exemple quatre parois latérales relient entre elles la paroi supérieure et la paroi inférieure. Les parois latérales s'étendent par exemple parallèlement entre elles deux à deux. Par exemple chacune des parois latérales s'étendant orthogonalement à au moins l'une et de préférence aux deux parois inférieure et supérieure.

Le caisson 100 est globalement conformé en un parallélépipède rectangle. Le caisson 100 présente de préférence des bords arrondis et non des arêtes vives.

Le caisson 100 est conformé de sorte que lorsqu'il repose sur un support, sa paroi inférieure et sa paroi supérieure s'étendent parallèlement au support et ses parois latérales s'étendent orthogonalement au support.

Le caisson 100 est pourvu d'au moins une ouverture 101. De préférence, l'ouverture 101 est ménagée dans une paroi latérale du caisson 100. L'ouverture 101 est ainsi débouchant à une première extrémité à l'intérieur du caisson 100 et à une deuxième extrémité à l'extérieur du caisson 100. L'ouverture 101 s'étend selon un premier axe X à travers la paroi latérale du caisson 100. Le premier axe X est ici horizontal lorsque le caisson 100 repose sur un plan horizontal.

L'équipement électronique 1 comporte également au moins une unité de contrôle 102 de l'équipement électronique 1. L'unité de contrôle 102 est ou comporte par exemple un processeur, un micro-ordinateur ou un microcontrôleur ou tout autre moyen.

L'équipement électronique 1 comprend également un dispositif de capture d'images qui est en communication avec l'unité de contrôle 102.

Le dispositif de capture d'images comporte par exemple une caméra 20 et un organe de gestion 21 de la caméra. L'organe de gestion 21 comporte ou est par exemple un processeur, tel qu'un processeur de signal numérique (plus connu sous l'acronyme anglais de DSP), un micro-ordinateur ou un microcontrôleur ou tout autre moyen. L'organe de gestion 21 peut être déporté ou non de la caméra 20 et/ou intégré ou non à la caméra 20. On comprend ainsi que l'organe de gestion 21 est dédié à la caméra 20 et de préférence est dédié uniquement à la caméra 20. L'organe de gestion 21 est ainsi différent de l'unité de contrôle 102 qui s'occupe de tout l'équipement électronique 1 et a donc un rôle plus général que l'organe de gestion 21.

Le dispositif de capture d'images et/ou l'unité de contrôle 102 est par exemple porté par une carte à circuits imprimés 103 fixée à l'une ou plusieurs parois du caisson 100.

La caméra 20 est positionnée à l'intérieur du caisson 100 de sorte à pouvoir visualiser l'extérieur du caisson par l'intermédiaire de l'ouverture 101.

Typiquement, la caméra 20 présente un champ de vision 22 qui, lorsque la caméra 20 est allumée, est en regard de l'ouverture 101. De la sorte, au moins une portion du champ de vision 22 de la caméra 20 s'étend à travers la première ouverture 101. Typiquement, le champ de vision 22 est centré autour d'au moins un axe de vision. De préférence, ledit axe de vision 22 s'étend parallèlement au premier axe X. Le champ de vision 22 s'étend de préférence coaxialement au premier axe X et/ou à l'ouverture 101.

De préférence, la caméra 20 est montée fixe vis-à-vis du caisson 100. La caméra 20 est ainsi fixée soit directement soit indirectement à au moins une paroi du caisson 100. Dans le cas présent, la caméra 20 est fixée indirectement (par l'intermédiaire de la carte à circuits imprimés 103) au caisson 100.

La paroi latérale du caisson 100 dans laquelle est ménagée l'ouverture 101 forme ainsi la paroi avant 110 du caisson 100, c'est-à-dire la paroi du caisson 100 destinée à faire face à l'utilisateur.

L'équipement électronique 1 comprend également un obturateur 10 de la caméra 20.

Par exemple, l'obturateur 10 est agencé à l'extérieur du caisson 100. L'obturateur 10 est agencé ici devant la paroi avant 110 du caisson 100.

L'obturateur 10 est monté mobile vis-à-vis du caisson 100. Par exemple, l'obturateur 10 est monté mobile dans le caisson 100 selon au moins un mouvement de translation et de préférence selon un unique mouvement de translation. Par exemple, l'obturateur 10 est monté mobile dans le caisson 100 selon un mouvement de translation selon un troisième axe Z qui est ici orthogonal au premier axe X. Le troisième axe Z s'étend ici à l'horizontal lorsque le caisson 100 repose sur un plan horizontal.

De préférence, l'obturateur 10 et/ou le caisson 100 sont conformés de sorte que l'obturateur 10 puisse se déplacer relativement au caisson 100 entre deux positions d'extrémité dans lesquelles l'obturateur 10 est en butée contre une portion du caisson 100.

On comprend ainsi que l'obturateur 10 est monté mobile sur le caisson 100 entre :
- une première position d'extrémité, dite état de repos de l'obturateur 10 (figure 1a),
- une deuxième position d'extrémité, dite état de travail de l'obturateur 10 (figure 1b et figure 1c).

Dans son état de repos, l'obturateur 10 est agencé dans le caisson de sorte à s'étendre en regard de l'ouverture 101 du caisson 100. Le champ de vision 22 est alors masqué par l'obturateur 10. De la sorte, la caméra 20 ne peut visualiser l'extérieur du caisson 100.

Dans son état de travail, l'obturateur 10 est agencé dans le caisson de sorte à être décalé de l'ouverture 101 du caisson 100. De la sorte, la caméra 20 peut visualiser l'extérieur du caisson 100.

L'équipement électronique 1 comprend également un volet 11 de protection. Le volet 11 comporte au moins une portion translucide. *On rappelle ici qu'un objet est dit translucide s'il laisse passer la lumière sans permettre de distinguer nettement d'autres objets à travers lui, en raison de multiples réfractions anisotropes des rayons lumineux. Il se distingue ainsi d'un objet transparent, qui laisse passer la lumière et permet de distinguer les objets à travers lui, et d'un objet opaque qui absorbe ou réfléchit les rayons lumineux. Un objet translucide diffuse la lumière lors de sa transmission à travers lui, ce qui rend l'observation au travers dudit objet complexe puisque tout apparaitra flou.*

Ladite portion peut être colorée ou peut être non colorée. Par exemple, ladite portion est en polycarbonate coloré et par exemple en polycarbonate teinté par du dioxyde de titane. De préférence, ladite portion permettant la transmission de la lumière forme toute la pièce constituant le volet 11. Ainsi tout le volet 11 est ici translucide.

Par exemple, le volet 11 est agencé à l'intérieur du caisson 100. On comprend donc que le volet 11 est agencé derrière la paroi avant 110 du caisson 100. On comprend également que l'obturateur mobile 10 est agencé dans le caisson 100 entre la paroi avant 110 du caisson 100 et la caméra 20. L'utilisateur utilise alors l'ouverture 101 pour pouvoir bouger le volet 11 relativement au caisson 100.

Le volet 11 est monté mobile vis-à-vis du caisson 100. Par exemple, le volet 11 est monté mobile dans le caisson 100 selon au moins un mouvement de translation et de préférence selon un unique mouvement de translation. Par exemple, le volet 11 est monté mobile dans le caisson 100 selon un mouvement de translation qui est parallèle au troisième axe Z.

Le volet 11 est par exemple conformé en une plaquette. L'utilisateur peut ainsi coulisser la plaquette le long de rail correspondant du caisson 100. La plaquette est par exemple munie d'une languette permettant à un utilisateur de pouvoir manipuler le volet 11 à travers l'ouverture 101 du caisson 100.

De préférence, le volet 11 et/ou le caisson 100 sont conformés de sorte que le volet 11 puisse se déplacer relativement au caisson 100 entre deux positions d'extrémité dans lesquelles le volet 11 est en butée contre une portion du caisson 100.

On comprend ainsi que le volet 11 est monté mobile entre :
- une première position d'extrémité, dite état de retrait (figure 1a et figure 1c),
- une deuxième position d'extrémité, dite état de protection (figure 1b).

Dans son état de retrait, le volet 11 est agencé dans le caisson 100 de sorte à être décalé de l'ouverture 101 du caisson 100. De la sorte, la caméra 20 peut visualiser l'extérieur du caisson 100 sans intermédiaire à condition que l'obturateur 10 soit lui-même dans son état de travail. Dans son état de protection, le volet 11 est agencé dans le caisson de sorte à s'étendre en regard de l'ouverture 101 du caisson 100. Le champ de vision de la caméra 20 est alors masqué par la portion translucide du volet 11. De la sorte, la caméra 20 ne peut visualiser l'extérieur du caisson 100 qu'à travers ladite portion (et à condition que l'obturateur 10 soit en état de travail). On comprend que les images acquises par la caméra 20 sont alors floues. En particulier, elles ne permettent pas de distinguer avec netteté les personnes présentes devant la caméra 20.

Dans le premier mode de réalisation, le volet 11 est une pièce indépendante de l'obturateur 10.

Dans le premier mode de réalisation, le mouvement du volet 11 relativement au caisson 100 est indépendant du mouvement de l'obturateur 10 relativement au caisson 100. L'utilisateur peut utiliser de plusieurs manières l'équipement électronique 1 ainsi décrit.

Il peut tout d'abord placer l'obturateur 10 en état de repos (peu importe l'état du volet 11) lorsqu'il n'utilise pas l'équipement décodeur 1 ou à du tout moins lorsqu'il n'utilise pas la caméra 20.

Il peut également placer l'obturateur 10 en état de travail et le volet 11 en état de retrait pour utiliser l'équipement décodeur 1 de manière usuelle et notamment sa caméra 20.

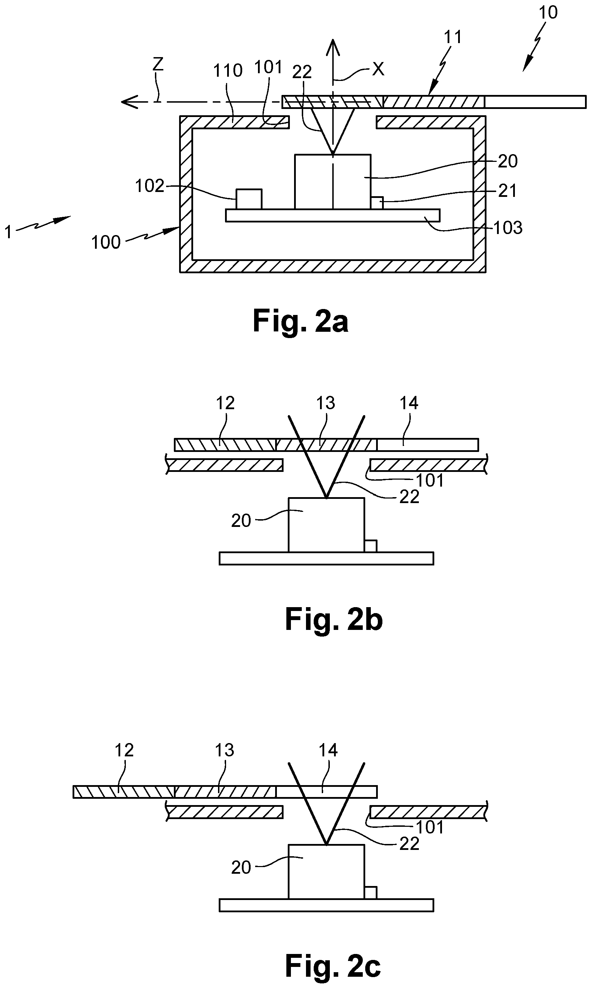

Il peut également placer l'obturateur 10 en état de travail et le volet 11 en état de protection lorsqu'il souhaite temporairement flouter les images acquises par la caméra 20. En référence aux figures 2a à 2c, un deuxième mode de réalisation va être à présent décrit. Alors que dans le premier mode de réalisation, le volet 11 et l'obturateur 10 formaient deux pièces distinctes, dans le deuxième mode de réalisation, le volet 11 est porté par l'obturateur 10. De préférence, le volet 11 et l'obturateur 10 forment une unique pièce. Le volet 11 et l'obturateur 10 sont ainsi solidaires en mouvement.

L'obturateur 10 est par ailleurs agencé de sorte à présenter toujours au moins une zone en regard de l'orifice 101 et donc du caisson 100.

A cet effet, l'obturateur 10 présente trois zones distinctes : une première zone 12 opaque (jouant le rôle de l'obturateur 10 en état de repos), une deuxième zone 13 translucide (jouant le rôle du volet 11) et une troisième zone 14 transparente (jouant le rôle de l'obturateur 10 en état de travail). Le mouvement de l'obturateur 10 vis-à-vis du caisson 100 amène l'une ou l'autre de ces zones en vis-à-vis de la caméra 20 afin que celle-ci puisse visualiser l'extérieur du caisson 100 de manière nette (via la troisième zone 14) ou de manière floue (via la deuxième zone 13) ou ne puisse pas visualiser l'extérieur du caisson 100 (via la première zone 12).

L'obturateur 10 est par exemple conformé en une barrette s'étendant longitudinalement selon une direction donnée, les trois zones 12, 13, 14 de la barrette s'étendant successivement les unes à la suite des autres le long de cette direction longitudinale. Par exemple, la première zone 12, la deuxième zone 13 et la troisième zone 14 se succèdent le long de cette direction longitudinale de sorte que la deuxième zone 13 soit encadrée par la première zone 12 et la troisième zone 14. Lorsque l'obturateur 10 est en place sur le caisson 100, ladite direction donnée est de préférence parallèle au troisième axe Z.

Lorsque l'utilisateur coulisse la barrette (par exemple le long de rails correspondants du caisson 100) il peut ainsi amener une zone différente de l'obturateur 10 en vis-à-vis de la caméra 20. La barrette est optionnellement munie d'une languette permettant à un utilisateur de pouvoir manipuler la barrette aisément.

Par exemple, l'obturateur 10 est agencé à l'extérieur du caisson 100. Par exemple, l'obturateur 10 est agencé devant la paroi avant 110 du caisson 100.

Ainsi, l'obturateur 10 et/ou le caisson 100 sont conformés de sorte que l'obturateur 10 peut se déplacer relativement au caisson 100 entre trois positions : à savoir deux positions d'extrémité, dans lesquelles l'obturateur 10 est en butée contre une portion du caisson 100, et une portion neutre entre les deux positions d'extrémité.

Par exemple l'obturateur 10 est monté mobile entre :
- une première position d'extrémité, dite état de repos pour l'obturateur 10 et de retrait pour le volet 11 (figure 2a),
- une position neutre (figure 2b), dite état de travail pour l'obturateur 10 et état de protection pour le volet 11,
- une deuxième position d'extrémité, dite état de travail pour l'obturateur 10 et état de retrait pour le volet 11 (figure 2c).

Dans la première position d'extrémité, l'obturateur 10 est agencé dans le caisson 100 de sorte que sa première zone 12 s'étend en regard de l'ouverture 101 du caisson 100. Le champ de vision 22 de la caméra 20 est alors masqué par l'obturateur 10. De la sorte, la caméra 20 ne peut visualiser l'extérieur du caisson 100.

Dans la position neutre, l'obturateur 10 est agencé dans le caisson 100 de sorte que sa deuxième zone 13 s'étende en regard de l'ouverture 101 du caisson 100. Le champ de vision 22 de la caméra 20 est alors masqué par la portion translucide du volet 11. De la sorte, la caméra 20 ne peut visualiser l'extérieur du caisson 100 qu'à travers ladite portion (et à condition que l'obturateur 10 soit en position de travail). On comprend que les images acquises par la caméra 20 sont alors floues. En particulier, elles ne permettent pas de distinguer avec netteté les personnes présentes devant la caméra.

Dans la deuxième position d'extrémité, l'obturateur 10 est agencé dans le caisson 100 de sorte que sa troisième zone 14 s'étende en regard de l'ouverture 101 du caisson 100. De la sorte la caméra 20 peut visualiser l'extérieur du caisson 100 sans être gênée par le volet 11.

L'utilisateur peut utiliser de plusieurs manières l'équipement électronique 1 ainsi décrit.

Il peut tout d'abord placer l'obturateur 10 dans sa première position d'extrémité (état de repos de l'obturateur 10 combiné à l'état de retrait du volet 11) lorsqu'il n'utilise pas l'équipement décodeur 1 ou à du tout moins lorsqu'il n'utilise pas la caméra 20.

Il peut également placer l'obturateur 10 en position neutre (état de travail de l'obturateur 10 combiné à l'état de protection du volet 11) lorsqu'il souhaite temporairement flouter les images acquises par la caméra 20.

Il peut également placer l'obturateur 10 dans sa deuxième position d'extrémité (état de travail de l'obturateur 10 combiné à l'état de retrait du volet 11) pour utiliser l'équipement décodeur 1 de manière usuelle et notamment sa caméra 20.

Mis à part de ce qui a été décrit ci-dessus, le deuxième mode de réalisation est identique au premier mode de réalisation.

Que l'on se place dans le cas du premier mode de réalisation ou dans le deuxième mode de réalisation, l'équipement électronique 1 est de préférence configuré pour pouvoir fonctionner selon trois modes de fonctionnement différents :
- un mode de veille profonde,
- un mode de veille légère,
- un mode actif.

De préférence, dans le mode actif, tous les composants de l'équipement électronique 1 sont alimentés.

Dans le mode de veille légère, seulement une partie des composants de l'équipement électronique 1 sont alimentés (dont au moins le dispositif de capture d'images et au moins un autre composant). De préférence, seuls le dispositif de capture d'images (incluant donc la caméra 20 et son organe de gestion 21) et les composants présentant un temps de démarrage long sont alimentés. Par « long » on entend par exemple supérieur à vingt secondes et par exemple supérieur à trente secondes. A minima, dans le mode de veille légère, aucun signal n'est transmis par l'équipement électronique 1 vers un équipement additionnel externe à l'équipement électronique 1 (tel qu'un téléviseur).

De préférence, dans le mode de veille profonde, seulement une partie des composants de l'équipement électronique 1 sont alimentés (dont le dispositif de capture d'images incluant donc la caméra 20 et son organe de gestion 21), étant entendu que moins de composants que dans le mode de veille légère sont alimentés. De préférence, seul le dispositif de capture d'images (incluant donc la caméra 20 et son organe de gestion 21) demeure alimenté. Bien entendu, dans le mode de veille profonde, aucun signal n'est transmis par l'équipement électronique 1 vers un équipement additionnel externe à l'équipement électronique 1 (tel qu'un téléviseur).

L'équipement électronique 1 mettra un temps considéré comme long (et par exemple au moins vingt secondes, et généralement au moins trente secondes, et généralement entre trente secondes et une minute) pour basculer de son mode de veille profonde à son mode actif.

Le mode de veille légère est plus coûteux en énergie que le mode de veille profonde. En revanche, l'équipement électronique 1 mettra moins de temps pour revenir au mode actif à partir du mode de veille légère que s'il partait du mode de veille profonde. L'équipement électronique 1 mettra en effet quelques secondes seulement (et typiquement moins de dix secondes) pour passer du mode de veille légère au mode actif.

De préférence, l'unité de contrôle 102 est apte à faire basculer l'équipement électronique 1 dans chacun des trois modes précités.

En particulier, l'unité de contrôle 102 est apte à faire basculer l'équipement électronique 1 entre le mode de veille légère et le mode de veille profonde, et inversement, à partir d'au moins un signal transmis par le dispositif de capture d'images lorsque le volet 11 est dans son état de protection et l'obturateur 10 est dans son état de travail. En service, lorsque le volet 11 est dans son état de retrait et l'obturateur 10 est dans son état de travail, l'équipement électronique 1 est dans son mode actif. Un flux vidéo est ainsi généré par l'équipement électronique 1.

Si l'utilisateur ne souhaite plus utiliser l'équipement électronique 1, il peut ordonner un basculement en mode de veille profonde (par commande vocale, par appui sur une zone de l'équipement électronique 1 ou d'un appareil déporté tel qu'un téléphone portable ou une télécommande, etc.).

On comprend ainsi que l'équipement électronique 1 peut passer du mode actif au mode de veille profonde (et inversement) sans passer obligatoirement par le mode de veille légère.

L'utilisateur peut toutefois souhaiter basculer l'équipement électronique 1 uniquement dans le mode de veille légère. Dans ce cas, il déplace le volet 11 dans son état de protection (l'obturateur 10 étant dans son état de travail). Ceci provoque de préférence automatiquement le passage de l'équipement électronique 1 de son mode actif à son mode de veille légère. Alternativement ou en complément, l'utilisateur peut également commander lui-même le passage de l'équipement électronique 1 de son mode actif à son mode de veille légère (par commande vocale, par appui sur une zone de l'équipement électronique 1 ou d'un appareil déporté tel qu'un téléphone portable ou une télécommande, etc.). Dans tous les cas, la caméra 20 continue à acquérir des images puisqu'elle est toujours alimentée. De par le positionnement du volet 11 dans son état de protection, les images acquises par la caméra 20 sont floues. Ceci protège l'intimité de l'utilisateur. En particulier, il est toujours possible de discerner la présence d'une personne sur les images mais ses caractéristiques personnelles (âge, genre, visage, ...) ne sont pas déductibles desdites images. L'organe de gestion 21 continue dans ce cas à analyser les images acquises par la caméra 20. En effet, même si les images sont floues, au moins une information peut être obtenue de ces images comme une information caractéristique d'un mouvement d'au moins un élément présent sur les images. L'information peut ainsi être une vitesse, une accélération, une distance parcourue, ... dudit élément. On peut ainsi estimer si un élément visible par la caméra 20 est mobile par rapport à elle. Ceci signifierait que l'utilisateur est toujours présent et peut donc à tout moment rouvrir le volet 11 pour utiliser de nouveau l'équipement électronique 1.

De la sorte, l'organe de gestion 21 analyse les images pour déterminer si un élément est présent sur les images et mobile sur les images.

Si un tel élément est présent, alors l'organe de gestion 21 ne prend aucune décision. L'équipement électronique 1 demeure en mode veille légère.

En revanche si aucun élément en mouvement n'est présent sur les images au bout d'un intervalle de temps donné et/ou au bout d'un nombre d'images étudiées donné, alors l'organe de gestion 21 transmet un signal à destination de l'unité de contrôle qui bascule l'équipement électronique 1 en mode de veille profonde. Ce passage s'effectue de préférence automatiquement.

L'intervalle de temps donné est compris entre par exemple 1 et 7 minutes et par exemple entre 2 et 5 minutes.

Le nombre d'images étudiées donné est par exemple compris entre 2000 et 7000 images et par exemple entre 3000 et 6000 images.

De la sorte, on limite la consommation électrique de l'équipement électronique 1.

Bien entendu, l'équipement électronique 1 peut également retourner dans son état de mode actif, après avoir temporairement été dans son état de mode de veille légère, et ce sans passer par le mode de veille profonde. Ceci sera par exemple le cas si des éléments mobiles ont toujours été détectés sur les images lorsque l'équipement électronique 1 était en mode de veille légère.

Dans le mode de veille profonde, on comprend que le dispositif de capture d'images continue d'acquérir des images (floues) et de les analyser.

De la sorte, l'organe de gestion 21 analyse les images pour déterminer si un élément est présent sur les images et mobile sur les images.

Si aucun élément n'est présent, alors l'organe de gestion 21 ne prend aucune décision. L'équipement électronique 1 demeure en mode de veille profonde.

En revanche si un élément en mouvement est présent sur les images au bout d'un intervalle de temps donné et/ou au bout d'un nombre d'images étudiées donné, alors l'organe de gestion 21 transmet un signal à destination de l'unité de contrôle 102 qui bascule l'équipement électronique 1 en mode de veille légère. Ce passage s'effectue de préférence automatiquement.

L'intervalle de temps donné est compris entre par exemple 0.5 et 2 secondes et par exemple entre 1 et 2 secondes.

Le nombre d'images étudiées donné est par exemple compris entre 10 et 70 images et par exemple entre 25 et 50 images. L'équipement électronique 1 est ainsi rapidement prêt à pouvoir être utilisé.

Bien entendu, l'équipement électronique 1 peut également retourner dans son état de mode de veille profonde, après avoir temporairement été dans son état de mode de veille légère, et ce sans passer par le mode actif. Ceci sera par exemple le cas si aucun élément mobile n'est détecté sur les images lorsque l'équipement électronique 1 est en mode de veille légère.

De préférence, l'organe de gestion 21 est configuré pour transmettre un signal à l'unité de contrôle 102, suite à la détection de mouvements ou d'absence de mouvements sur les images, uniquement si cette détection est relative à une partie supérieure des images.

Ceci permet d'éviter de basculer l'équipement électronique 1 d'un mode à un autre lorsque le mouvement détecté est celui d'un enfant ou d'un animal.

Ainsi, en étudiant uniquement le mouvement sur les parties supérieures des images, on limite un risque de basculer l'équipement électronique 1 d'un mode à un autre si le mouvement détecté n'est pas celui d'un adulte.

Par exemple, l'organe de gestion 21 étudie le mouvement des éléments sur une hauteur des images comprise entre X et le bord supérieur des images, X étant compris entre la moitié de l'image et le tiers supérieur des images.

De préférence, l'organe de gestion 21 est configuré pour transmettre un signal à l'unité de contrôle 102 suite à la détection de mouvements ou d'absence de mouvements sur les images, uniquement si cette détection est relative à un élément dont la vitesse de déplacement est supérieure à un seuil donné. Le seuil donné peut donc être un seuil de vitesse mais également un seuil d'accélération, un seuil de distance minimale à parcourir (dans un intervalle de temps donné par exemple compris entre 0.5 et 2 secondes), etc. Ceci permet d'éviter de basculer l'équipement électronique 1 d'un mode à un autre lorsque le mouvement détecté est celui d'un élément non humain (nuage, ombre, ...) dont les mouvements sont lents.

Ainsi, en étudiant uniquement le mouvement d'éléments rapides sur les images, on limite un risque de basculer l'équipement électronique 1 d'un mode à un autre lorsque le mouvement détecté n'est pas celui d'un être humain. L'équipement électronique 1 ainsi décrit permet de pouvoir passer en veille de manière manuelle par l'utilisateur mais également de manière automatique après un laps de temps d'inutilisation.

L'équipement électronique 1 ainsi décrit permet de détecter la présence ou l'absence d'au moins un utilisateur tout en respectant sa vie privée. Cette détection permet d'économiser de l'énergie en passant en veille profonde en l'absence d'utilisateur et de repasser en veille légère dès que l'utilisateur est présent.

La détection est réalisée à l'aide du dispositif de capture d'images avantageusement déjà intégré dans des équipements électroniques 1 du marché.

La détection de présence de personnes devant la caméra est ainsi réalisée sans que cela ne soit fait au détriment du respect de la vie privée d'un utilisateur.

Bien entendu, l'invention n'est pas limitée aux modes de réalisation décrits mais englobe toute variante entrant dans le champ de l'invention telle que définie par les revendications.

En particulier, l'équipement électronique est, ici, un boîtier décodeur, mais l'invention peut également être intégrée à un ordinateur, à une télévision, et à tout autre équipement électronique intégrant un dispositif de capture d'images (set-top-box, video-sound-box, ...).

En particulier, le caisson peut être un cube, un parallélépipède, un cylindre, un prisme ou une quelconque autre forme permettant d'intégrer la présente invention. Quel que soit le mode de réalisation envisagé, l'obturateur pourra être agencé à l'extérieur du caisson ou à l'intérieur du caisson.

Quel que soit le mode de réalisation envisagé, le volet pourra être agencé à l'extérieur du caisson ou à l'intérieur du caisson.

On pourra ainsi avoir le volet agencé à l'extérieur du caisson et l'obturateur agencé à l'intérieur du caisson.

Quel que soit le mode de réalisation envisagé, l'obturateur pourra être conformé pour présenter un orifice à travers lequel le dispositif de capture d'images pourra visualiser l'extérieur du caisson lorsque l'obturateur sera en état de travail, ledit orifice étant décalé de l'orifice du caisson par lequel le dispositif de capture d'images peut visualiser l'extérieur du caisson lorsque l'obturateur sera en état de repos afin de bloquer le champ de vision du dispositif de capture d'images.

Quel que soit le mode de réalisation envisagé, le volet pourra être conformé pour présenter un orifice à travers lequel le dispositif de capture d'images peut visualiser l'extérieur du caisson lorsque l'obturateur est en état de travail et le volet en état de retrait, ledit orifice étant décalé de l'orifice du caisson par lequel le dispositif de capture d'images peut visualiser l'extérieur du caisson lorsque le volet est en état de protection afin que le dispositif de capture d'images ne puisse observer l'extérieur qu'à travers la portion translucide du volet. Bien qu'ici la portion translucide du volet soit réalisée par coloration d'une matière (peinture, pigment, teinture, etc.), la portion translucide du volet pourra être réalisée différemment. Par exemple, ladite portion pourra être dans une matière dépolie soit une matière ayant subi un traitement chimique ou mécanique (sable, grainage, ...) pour en perdre la transparence originelle. Ladite portion pourra ainsi (peu importe la méthode choisie pour la rendre translucide) être à base de verre et/ou de matière plastique.

Bien qu'ici le volet puisse être déplacé par l'intermédiaire de l'ouverture du caisson, le volet pourra être déplacé par l'intermédiaire d'une autre ouverture ménagée dans le caisson. Le même raisonnement s'applique à l'obturateur.

Le traitement des images pour décider du basculement d'un mode de veille à un autre pourra inclure une ou plusieurs caractéristiques différentes de celles indiquées. Par exemple, le traitement des images pourra également prendre en compte l'heure de la journée afin d'adapter son traitement aux dimensions des ombres éventuellement présentes sur les images. Par exemple, on pourra estimer le déplacement d'un élément sur les images acquises au cours d'un laps de temps donné (par exemple entre 0.5 et 2 secondes) et comparer ce déplacement à un seuil prédéterminé calculé à partir de la vitesse de rotation relative entre le soleil et la terre. Bien qu'ici l'obturateur présente soit uniquement une zone occultante soit trois zones (une occultante, une translucide et une opaque), l'obturateur pourra comporter un nombre différents de zones et par exemple pourra comporter deux zones (une occultante et une translucide). Dans ce dernier cas, aucune partie de l'obturateur (ni du volet) ne sera présente devant l'ouverture lorsque l'obturateur sera en état de travail et le volet en état de retrait comme dans le premier mode de réalisation. Dans tous les cas, la zone de l'obturateur permettant à la caméra de pouvoir visualiser de manière nette l'extérieur de l'équipement électronique pourra être transparente et/ou être muni d'un orifice pouvant être aligné avec l'ouverture du caisson.

Bien qu'ici le volet présente uniquement une zone, le volet pourra présenter un plus grand nombre de zones et par exemple pourra comporter deux zones (une transparente et/ou munie d'un orifice et une translucide).

Le mouvement du volet et/ou de l'obturateur vis-à-vis du caisson pourra être au moins en partie automatique.

Bien qu'ici le passage entre le mode de veille profonde et le mode de vieille légère (et vice-versa) est réalisé à partir d'au moins une image transmise par le dispositif de capture d'images lorsque le volet est dans son état de protection et l'obturateur est dans son état de travail, le passage entre le mode de veille profonde et le mode de vieille légère (et vice-versa) pourra en plus être également réalisé à partir d'au moins une image transmise par le dispositif de capture d'images lorsque le volet est dans son état de retrait et l'obturateur est dans son état de travail. Le procédé de gestion de la mise en veille sera alors le même que celui décrit ci-dessus lorsque le volet est dans son état de protection et l'obturateur est dans son état de travail.

## Revendications

1. Equipement électronique, comprenant :
- un caisson (100) pourvu d'au moins une ouverture (101),
- un dispositif de capture d'images doté d'un champ de vision (22),
- un obturateur (10) monté mobile dans le caisson entre au moins un état de travail et un état de repos de sorte que, lorsque l'obturateur est dans son état de travail, le dispositif de capture d'images visualise en service l'extérieur du caisson par l'intermédiaire de l'ouverture, et, lorsque l'obturateur est dans son état de repos, l'obturateur masque l'ouverture pour le dispositif de capture d'images,
**caractérisé en ce que** l'équipement électronique comprend un volet (11) monté mobile dans le caisson entre au moins un état de retrait et un état de protection de sorte que, lorsque le volet est dans son état de protection et l'obturateur est dans son état de travail, le dispositif de capture d'images visualise en service l'extérieur du caisson par l'intermédiaire de l'ouverture et d'une zone translucide du volet.

2. Equipement électronique selon la revendication 1, dans lequel le volet (11) est intégré à l'obturateur.

3. Equipement électronique selon la revendication 2, dans lequel l'obturateur (10) est monté mobile dans le caisson (100) entre une première position dans laquelle l'obturateur est dans son état de travail et le volet dans son état de retrait, une deuxième position dans laquelle l'obturateur est dans son état de travail et le volet dans son état de protection et une troisième position dans laquelle l'obturateur est dans son état de repos.

4. Equipement électronique selon la revendication 3, dans lequel l'obturateur (10) est monté coulissant sur le caisson (100) entre ses trois positions.

5. Equipement électronique selon la revendication 1, dans lequel le volet (11) est indépendant de l'obturateur.

6. Equipement électronique selon la revendication 5, dans lequel l'un de l'obturateur (10) ou du volet (11) est monté mobile sur l'extérieur du caisson (100) et l'autre de l'obturateur ou du volet est monté mobile à l'intérieur du caisson.

7. Equipement électronique selon l'une des revendications précédentes, dans lequel le volet (11) est teinté.

8. Equipement électronique selon l'une des revendications précédentes, dans lequel l'équipement électronique (1) est un boitier décodeur.

9. Equipement électronique selon l'une des revendications précédentes, comprenant au moins une unité de contrôle (102) connectée au dispositif de capture d'images, l'unité de contrôle étant apte à faire basculer l'équipement électronique dans chacun d'au moins trois modes de fonctionnement différents qui sont un mode nominal, un mode de veille légère et un mode de veille profonde.

10. Equipement électronique selon la revendication 9, dans lequel l'unité de contrôle (102) est apte à faire basculer l'équipement électronique entre le mode de veille légère et le mode de veille profonde, et inversement, à partir d'au moins une image transmise par le dispositif de capture d'images lorsque le volet est dans son état de protection et l'obturateur est dans son état de travail.

11. Equipement électronique selon la revendication 10, dans lequel l'unité de contrôle (102) est apte à faire basculer l'équipement électronique entre le mode de veille légère et le mode de veille profonde, et inversement, à partir d'au moins une image transmise par le dispositif de capture d'images également lorsque le volet est dans son état de de retrait et l'obturateur est dans son état de travail.

12. Equipement électronique selon la revendication 10 ou la revendication 11, dans lequel l'unité de contrôle (102) est apte à faire basculer l'équipement électronique entre le mode de veille légère et le mode de veille profonde, et inversement, à partir seulement d'une partie supérieure d'au moins une image transmise par le dispositif de capture d'images lorsque le volet (11) est dans son état de protection et l'obturateur (10) est dans son état de travail.

13. Procédé de gestion de la mise en veille d'un équipement électronique selon l'une des revendications 1 à 11, comprenant au moins les étapes de :
- analyser des images acquises par le dispositif de capture d'images, lorsque le volet (11) est dans son état de protection et l'obturateur (10) est dans son état de travail, afin de détecter un mouvement d'au moins un élément présent sur les images,
- basculer l'équipement décodeur dans le mode de veille profonde si l'équipement décodeur était dans le mode de veille légère si aucun mouvement n'est détecté dans un intervalle de temps donné ou basculer l'équipement décodeur dans le mode de veille légère si l'équipement décodeur était dans le mode de veille profonde et qu'un mouvement est détecté.

14. Procédé de gestion selon la revendication 12, dans lequel le basculement du mode de veille profonde au mode de veille légère est effectué si le mouvement détecté a une vitesse supérieure à un seuil donné.

15. Procédé de gestion selon la revendication 13 ou la revendication 14, comprenant les étapes additionnelles de :
- analyser des images acquises par le dispositif de capture d'images, lorsque le volet (11) est dans son état de retrait et l'obturateur (10) est dans son état de travail, afin de détecter un mouvement d'au moins un élément présent sur les images,
- basculer l'équipement décodeur dans le mode de veille profonde si l'équipement décodeur était dans le mode de veille légère si aucun mouvement n'est détecté dans un intervalle de temps donné ou basculer l'équipement décodeur dans le mode de veille légère si l'équipement décodeur était dans le mode de veille profonde et qu'un mouvement est détecté.

16. Programme d'ordinateur comprenant des instructions qui conduisent un boitier électronique selon l'une des revendications 1 à 12 à exécuter le procédé selon l'une des revendications 13 à 15.

17. Support d'enregistrement lisible par ordinateur, sur lequel est enregistré le programme d'ordinateur selon la revendication 16.
